(19) **Europäisches Patentamt**

**European Patent Office**

**Office européen des brevets**

(11) **EP 0 960 721 A2**

(12) **EUROPÄISCHE PATENTANMELDUNG**

(43) Veröffentlichungstag:
**01.12.1999 Patentblatt 1999/48**

(51) Int. Cl.[6]: **B29D 7/01**, B29C 43/22
// B29K67:00

(21) Anmeldenummer: **99110303.7**

(22) Anmeldetag: **27.05.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **29.05.1998 DE 19823991**

(71) Anmelder: **Hostaglas Ltd.
Dublin 24 (IE)**

(72) Erfinder:
• **Schorning, Martin
Montclair NJ 07042 (US)**

• **Gunyuzlu, Mark
Charlotte, NC 28277 (US)**
• **Henrici, Rainer
61267 Neu-Anspach (DE)**

(74) Vertreter:
**Grünecker, Kinkeldey,
Stockmair & Schwanhäusser
Anwaltssozietät
Maximilianstrasse 58
80538 München (DE)**

(54) **Platte aus einem Thermoplast**

(57) Die vorliegende Erfindung betrifft eine amorphe Platte enthaltend als Hauptbestandteil einen Thermoplasten, dadurch gekennzeichnet, daß der Thermoplast mindestens ein bibenzolmodifizietes Polyalkylentheraphthalat und/oder ein bibenzolmodifizietes Polyalkylennaphthalat enthält.

**Fig. 1**

EP 0 960 721 A2

**Beschreibung**

Die Erfindung betrifft eine amorphe Platte aus einem Thermoplast, deren Dicke im Bereich von 0. 1 bis 20 mm liegt. Die Erfindung betrifft ferner ein Verfahren zur Herstellung dieser Platte und ihre Verwendung.

Amorphe Platten, die transparent, transparent oder gedeckt eingefärbt sein können, mit einer Dicke zwischen 0.1 und 20 mm sind hinreichend bekannt. Diese flächigen Gebilde bestehen aus amorphen, nicht kristallisierbaren Thermoplasten, Typische Beispiele für derartige Thermoplaste, die zu Platten verarbeitet werden, sind z.B. Polyvinylchlorid (PVC), Polycarbonat (PC) und Polymethylmethacrylat (PMMA). Seit einiger Zeit sind aus den DE 19519579, 19522118, 19528336, 19537107, 19610956 und 19625534 auch amorphe, transparente Platten mit einer Dicke zwischen 1 und 20 mm aus amorphen, kristallisierbaren Thermoplasten bekannt. Diese Halbzeuge werden auf sogenannten Extrusionsstraßen hergestellt (vgl. Polymere Werkstoffe, Band II, Technologie 1, S. 136, Georg Thieme Verlag, Stuttgart, 1984). Das Aufschmelzen des pulver- oder granulatförmigen Rohstoffes erfolgt in einem Extruder. Die amorphen Thermoplaste sind nach der Extrusion infolge der mit abnehmender Temperatur stetig steigenden Viskosität leicht über Glättwerke oder andere Ausformwerkzeuge umzuformen. Amorphe Thermoplaste besitzen dann nach der Ausformung eine hinreichende Stabilität, d. h. eine hohe Viskosität, um im Kalibrierwerkzeug „von selbst zu stehen". Sie sind aber noch weich genug, um sich vom Werkzeug formen zu lassen. Die Schmelzviskosität und Eigensteife von amorphen Thermoplasten ist im Kalibrierwerkzeug so hoch, daß das Halbzeug nicht vor dem Abkühlen im Kalibrierwerkzeug zusammenfällt. Bei leicht zersetzbaren Werkstoffen, wie z. B. PVC, sind bei der Extrusion besondere Verarbeitungshilfen, wie z. B. Verarbeitungsstabilisatoren gegen Zersetzung und Gleitmittel gegen zu hohe innere Reibung und damit unkontrollierbare Erwärmung notwendig. Äußere Gleitmittel sind erforderlich, um das Hängenbleiben an Wänden und Walzen zu verhindern.

Bei der Verarbeitung von PMMA wird z. B. zwecks Feuchtigkeitsentzug ein Entgasungsextruder eingesetzt.

Bei der Herstellung von transparenten Platten aus amorphen Thermoplasten sind z. T. kostenintensive Additive erforderlich, die teilweise migrieren und zu Produktionsproblemen infolge von Ausdampfungen und zu Oberflächenbelägen auf dem Halbzeug führen können. PVC-Platten sind schwer oder nur mit speziellen Neutralisations- bzw. Elektrolyseverfahren recyklierbar. PC- und PMMA-Platten sind ebenfalls schlecht und nur unter Verlust oder extremer Verschlechterung der mechanischen Eigenschaften recyklierbar.

Neben diesen Nachteilen besitzen PMMA-Platten auch eine extrem schlechte Schlagzähigkeit und zersplittern bei Bruch oder mechanischer Belastung. Daneben sind PMMA-Platten leicht brennbar, so daß sie beispielsweise für Innenanwendungen, im Messebau und in Waggons der Bahn, nicht eingesetzt werden dürfen.

PMMA- und PC-Platten sind außerdem nicht oder nur bedingt kaltformbar. Beim Kaltformen zerbrechen PMMA-Platten in gefährliche Splitter. Beim Kaltformen von PC-Platten können Haarrisse und Weißbruch auftreten.

In der EP-A-0 471 528 wird ein Verfahren zum Formen eines Gegenstandes aus einer Polyethylenterephthalat-(PET)-Platte beschrieben. Die PET-Platte wird in einer Tiefziehform beidseitig in einem Temperaturbereich zwischen der Glasübergangstemperatur und der Schmelztemperatur wärmebehandelt. Die geformte PET-Platte wird aus der Form herausgenommen, wenn das Ausmaß der Kristallisation der geformten PET-Platte im Bereich von 25 bis 50 % liegt. Die in der EP-A-0 471 528 offenbarten PET-Platten haben eine Dicke von 1 bis 10 mm. Da der aus dieser PET-Platte hergestellte, tiefgezogene Formkörper teilkristallin und damit nicht mehr transparent ist und die Oberflächeneigenschaften des Formkörpers durch das Tiefziehverfahren, die dabei gegebenen Temperaturen und Formen bestimmt werden, ist es unwesentlich, welche optischen Eigenschaften (z. B. Glanz, Trübung und Lichttransmission) die eingesetzten PET-Platten besitzen. In der Regel sind die optischen Eigenschaften dieser Platten schlecht und optimierungsbedürftig.

In der US-A-3,496,143 wird das Vakuum-Tiefziehen einer 3 mm dicken PET-Platte, deren Kristallisation im Bereich von 5 bis 25 % liegen soll, beschrieben. Die Kristallinität des tiefgezogenen Formkörpers ist jedoch größer als 25 %. Auch an diese PET-Platten werden keine Anforderungen hinsichtlich der optischen Eigenschaften gestellt. Da die Kristallinität der eingesetzten Platten bereits zwischen 5 und 25 % liegt, sind diese Platten trüb und undurchsichtig. Platten, hergestellt mit dem kristallisierbaren Thermoplasten erwähnt in DE 19519579, 19522118, 19528336, 19537107, 19610956 und 19625534 haben die Nachteile, daß die inhärente Witterungsstabilität bezüglich Oberflächenglanz, Trübung und die Schlagfestigkeit noch nicht optimal ist. Außerdem ist die dickenabhängige maximale Dauergebrauchstemperatur mit 60 -70°C relativ gering, während auch die Kerbempfindlichkeit relativ hoch ist und die Schlagfestigkeit bei Temperaturen unter 0°C stark abfällt.

Aufgabe der vorliegenden Erfindung ist es, eine amorphe Platte bereitzustellen, die neben den sehr guten mechanischen Eigenschaften in einem breiten Temperaturbereich, auch gute optische Eigenschaften aufweist, und zudem gute inhärente Witterungsstabilität aufweist.

Diese Aufgabe wird erfindungsgemäß gelöst durch eine amorphe Platte, enthaltend als Hauptbestandteil mindestens ein bibenzolmodifiziertes Polyalkylentheraphthalat und/oder ein bibenzolmodifiziertes Polyalkylennaphthalat.

Bevorzugte Ausgestaltungen sind in den Unteransprüchen offenbart. Es können auch einzelne oder mehrere der in den Ansprüchen offenbarten Merkmale jeweils für sich oder in Kombination erfinderische Lösungen der gestellten Aufgabe darstellen.

Der Ausdruck bibenzolmodifiziert bedeutet im Kontext der vorliegenden Erfindung eine Modifizierung mit Diphensäure (2,2-Biphenyldicarbonsäure; engl. bibenzoic acid). Zur Modifizierung mit Diphensäure wird bei der Herstellung des in der vorliegenden Erfindung verwendeten Thermoplasten ein Teil der Säurekomponente durch die Diphensäure ersetzt. Vorzugsweise liegt der Gehalt an Diphensäure zwischen 0,1 bis 100 Gew.-%, besonders bevorzugt zwischen 1 bis 50 Gew.-% und am stärksten bevorzugt zwischen 10 bis 30 Gew.-%, jeweils bezogen auf die im Thermoplasten enthaltene Säurekomponente.

Die Herstellung der modifizierten Thermoplasten, die in der vorliegenden Erfindung verwendet werden, erfolgt nach den ansonsten üblichen Verfahren, die dem Fachmann gut bekannt sind.

Bevorzugt sind bibenzolmodifiziertes Polyethylenterephthalat, bibenzolmodifiziertes Polybutylenterephthalat, bibenzolmodifiziertes Polypropylenterephthalat, bibenzolmodifiziertes Polyethylennaphthalat, bibenzolmodifiziertes Polypropylennaphthalat, bibenzolmodifiziertes Polybutylennaphthalat, wobei bibenzolmodifiziertes Polyethylenterephthalat und bibenzolmodifiziertes Polyethylennaphthalat besonders bevorzugt sind, sowie Mischungen der genannten Komponenten.

Zur Herstellung von den Copolymeren von Polyalkylentherephthalat oder Polyalkylennaphthalat können neben den Hauptmonomeren, wie z.B. Dimethyltherephthalat (DMT), Ethylenglycol (EG), Propylenglucol (PG), 1,4-Butandiol, Therephthalsäure (TA), und/oder 2,6-Naphtalendicarboxylsäure (NDA), auch Isophthalsäure (IPA), trans und/oder cis-1,4-Cyclohexandimethanol (c-CHDM, t-CHDM oder c/t-CHDM) verwendet werden.

Um die gute inhärente Witterungsstabilität noch zu verbessern, können zusätzlich UV-Stabilisator(en) zugegeben werden.

Hauptbestandteil heißt, daß die Menge an Thermoplast bevorzugt zwischen 50 und 100 Gew.-%, besonders bevorzugt zwischen 75 und 99.9 Gew.-% liegt. Die Restliche Menge an Additiven können lösliche und/oder nicht-lösliche Farbstoffe, und/oder UV- Stabilisatoren usw. sein.

Die erfindungsgemäße Platte kann Dicken von 0.1 bis 20 mm haben, insbesondere kann sie dicker sein als 0,5, 1, 1,5, 3, 4 oder 5 mm. Bevorzugte Dickenbereiche sind (in mm): 0,5 bis 8, 1 bis 10, 1,5 bis 12, 3 bis 15, 4 bis 20, 5 bis 20.

Die Vorteile der erfindungsgemäßen Platte sind: sehr gute optischen Eigenschaften, beispielsweise eine hohe Lichttransmission, ein hoher Oberflächenglanz, eine extrem niedrige Trübung sowie eine hohe Bildschärfe (Clarity), bei den transparenten und transparent eingefärbten Platten. Bei den gedeckt eingefärbten Platten sind ein hoher Oberflächenglanz und eine gedeckte, homogene Optik und Farbverteilung von Bedeutung. Die Platte zeichnet sich weiter durch sehr gute Temperatur- und gute inhärente UV-stabile Eigenschaften, zuzüglich gute mechanische Eigenschaften in breitem Temperaturbereich aus.

Durch die Modifizierung mit Diphensäure lassen sich die folgenden Vorteile erreichen:

Mit steigender Konzentration an Diphensäure steigt die Glastemperatur ($T_g$) des Thermoplasten und damit auch die Dauergebrauchstemperatur des Thermoplasten signifikant an. Dies ist vorteilhaft, insbesondere im Hinblick auf die relativ geringe Dauergebrauchstemperatur der herkömmlichen Platten aus kristallisierbaren Thermoplasten, z.B. der deutschen Patentanmeldung DE 19519579, die nur einen limitierten Einsatzbereich finden können. Da allerdings ein Bedarf an Platten mit höherer Dauergebrauchstemperatur besteht, insbesondere in Außen- und Innenanwendungen in wärmeren und heißen Klimaten oder bei Beleuchtungsanwendungen oder Anwendungen, die eine Standfestigkeit von etwa 80°C verlangen (Flugzeuge, Bahn, Automobil), ist die erhöhte Dauergebrauchstemperatur der erfindungsgemäßen Platte vorteilhaft. Die Glastemperatur von Thermoplasten, die in den erfindungsgemäßen Platten verwendet werden, zeigen überraschenderweise bei einer Modifizierung mit 10 Gew.-% Diphensäure eine um 5 bis 10°C erhöhte Glastemperatur und bei einer 20 Gew.-%igen Modifizierung mit Diphensäure eine um 10 bis 20°C erhöhte Glastemperatur, verglichen mit unmodifiziertem Polyethylenterephthalat. Diese erhöhte Glastemperatur bewirkt die höhere Dauergebrauchstemperatur der erfindungsgemäßen Platte und führt so zu dem überraschenden Effekt der vorliegenden Erfindung.

Weiterhin nimmt auch die Kristallisationsgeschwindigkeit durch die Modifizierung mit Diphensäure ab. Dies hat den Vorteil eines wesentlich größeren Verarbeitungsfensters bei der Weiterverarbeitung der Platte unter Verwendung von erhöhter Temperatur, wie beispielsweise beim Tiefziehen oder Warmbiegen. Platten, z.B. aus Polyethylenterephtalat, neigen bei solchen Weiterverarbeitungsverfahren dazu schnell zu kristallisieren, so daß keine vollständig amorphen Platten erhalten werden können. Die erfindungsgemäßen Platten lassen sich dagegen, selbst beim Vorliegend dicker Platten, durch einseitiges Heizen oder lange Zykluszeiten warmverformen. Dadurch kann auch in den Weiterverarbeitungsverfahren eine längere Zykluszeit und/oder eine höhere Temperatur erreicht werden, was eine bessere Ausbildung der Detailgetreue der abzubildenden Formen erzeugt.

Darüber hinaus sind auch mechanische Eigenschaften der erfindungsgemäßen Platten gegenüber den Planen aus Polyethylenterephtalat verbessert. So ist die Schlagfestigkeit von z.B. mit 10 Gew.-% Diphensäure modifiziertem PET bei -40°C etwa doppelt so hoch wie die Schlagfestigkeit von herkömmlichen PET-Platten. Auch die Kerbschlagempfindlichkeit ist geringer als bei den bekannten PET-Platten. Messungen der Izod-Kerbschlagempfindlichkeit haben ergeben, daß z.B. bei einer 10 Gew.-% Modifizierung die Schlagfestigkeit um etwa 50% erhöht wird.

Auch die Bewitterungsstabilität ist bei den erfindungsgemäßen Platten deutlich verbessert. Schnelltests unter Xenonlichtbestrahlung haben ergeben, daß schon eine 10 Gew.-% Modifizierung von Polyethylenterephtalat eine wesentliche Steigerung der Witterungsstabilität hervorruft, So nimmt die Schlagfestigkeit von herkömmlichen, nicht UV stabilisierten PET-Platten in den ersten 24 Stunden um etwa 25% ab, um dann nach 168 Stunden auf 50 bis 60% der Anfangsschlagfestigkeit abzufallen. Die Schlagfestigkeit von mit 10 Gew.-% Diphensäure modifizierten PET-Platten fällt dagegen in den ersten 24 Stunden überhaupt nicht ab, um dann nach 168 Stunden auf etwa 90% der Anfangsschlagfestigkeit abzufallen. Nach 504 Stunden (vergleichbar etwa einem Jahr Außenbewitterung in Mitteleuropa) ist die Schlagfestigkeit von herkömmlichen PET-Platten auf etwa 45% der Anfangsschlagfestigkeit abgefallen, während die Schlagfestigkeit der modifizierten Platten noch etwa 75% der Anfangsschlagfestigkeit zeigte.

Die oben diskutierten Effekte zeigen, daß durch die erfindungsgemäßen Platten eine wesentliche Verbesserung der herkömmlichen Materialien erreicht wurde.

Weitere Vorteile sind die unter anderem hohe Schlagzähigkeit in einem breiten Temperaturbereich, sowie eine hohe Bruchfestigkeit und eine über einen breiten Temperaturbereich relativ konstante Steifigkeit. Zu der guten Witterungsfestigkeit zählt neben noch gutem Erhalt der mechanischen Eigenschaften durch UV-Licht Einwirkung, auch Beibehalt der optischen Eigenschaften (Verfärbung, Clarity und Lichttransmission).

Darüber hinaus sind die erfindungsgemäßen Platten recyklierbar, insbesondere ohne Verlust der mechanischen Eigenschaften, sowie schwer brennbar, damit sie beispielsweise auch für Innenanwendungen, im Messebau und in Waggons der Bahn, eingesetzt werden können.

Die amorphe Platte kann in bevorzugten Ausgestaltungen transparent, transparent eingefärbt, gedeckt eingefärbt, kratzfest beschichtet, kaschiert und/oder zusätzlich UV-stabilisiert sein. Außerdem kann die erfindungsgemäße Platte Recyclate der voranstehend genannten Thermoplaste enthalten. Eine weitere bevorzugte Ausführungsform besteht in einer strukturierten, z.B. genarbten Oberfläche.

Ferner kann die erfindungsgemäße Platte elektroleitfähig beschichtet sein. Diese Beschichtung besteht aus den dem Fachmann bekannten Materialien, wie Metallen und Metalloxiden. Geeignete Metalle für die Beschichtung sind die Platinmetalle, die Eisenmetalle und die Metalle der Gruppen 3 bis 12 nach IUPAC. Diese Metalle können einzeln oder in Komponenten eingesetzt werden. Bevorzugt sind Metalle der Platingruppe sowie Wolfram und Molybdän, Geeignete Metalloxide basieren auf Grundlage der oben genannten Metalle.

Das Aufbringen der elektroleitfähigen Beschichtung erfolgt durch die dem Fachmann bekannten Verfahren. Besonders vorteilhaft läßt sich die Beschichtung durch das Plasma-Verfahren aufbringen.

Unter amorpher Platte werden im Sinne der vorliegenden Erfindung solche Platten verstanden, die, obwohl der eingesetzte kristallisierbare Thermoplast vorzugsweise eine Kristallinität zwischen 25 und 65 % besitzt, nicht kristallin sind. Nicht kristallin, d. h. im wesentlichen amorph bedeutet, daß der Kristallinitätsgrad im allgemeinen unter 5 %, vorzugsweise unter 1 % liegt und besonders bevorzugt 0 % beträgt.

In der transparenten Ausführungsform weist die amorphe Platte einen Oberflächenglanz, gemessen nach DIN 67530 (Meßwinkel 20°), der größer als 110, vorzugsweise größer als 120, besonders bevorzugt größer als 130 ist. Die Lichttransmission, gemessen nach ASTM D 1003 beträgt im Dickenbereich bis 10 mm mehr als 78 % und im Dickenbereich bis 20 mm mehr als 72%, im Dickenbereich bis 10 mm vorzugsweise mehr als 80 % und im Dickenbereich bis 20 mm mehr als 75%. Die Trübung der Platte, ebenfalls gemessen nach ASTMD 1003 ist weniger als 5 %, vorzugsweise weniger als 2 %. Die Bildschärfe der transparenten Platte, die auch Clarity genannt wird, und unter einem Winkel kleiner als 2,5° ermittelt wird (ASTM D 1003), liegt vorzugsweise über 90 % und besonders bevorzugt über 92 %.

In der transparent eingefärbten Ausführungsform enthält die amorphe Platte mindestens einen löslichen Farbstoff. Die Konzentration an löslichem Farbstoff liegt dabei vorzugsweise im Bereich von 0,001 bis 20 Gew.-%, bezogen auf das Gewicht des bibenzolmodifizierten Polyalkylentheraphthalats oder des bibenzolmodifizierten Polyalkylennaphthalats.

Unter löslichen Farbstoffen versteht man Substanzen, die im Polymeren molekular gelöst sind (DIN 55949).

Die farbliche Veränderung als Folge der Einfärbung der amorphen Platte beruht auf der wellenlängenabhängigen Absorption und/oder Streuung des Lichts. Farbstoffe können Licht nur absorbieren, nicht streuen, da die physikalische Voraussetzung für Streuung eine bestimmte Teilchenmindestgröße ist.

Bei der Einfärbung mit Farbstoffen handelt es sich um einen Lösungsprozeß. Als Ergebnis dieses Lösungsprozesses ist der Farbstoff molekular beispielsweise in dem PETBB- oder PENBB-Polymeren gelöst. Derartige Einfärbungen werden als transparent oder durchscheinend oder transluzent oder opal bezeichnet.

Von den verschiedenen Klassen der löslichen Farbstoffe werden besonders die fett- und aromatenlöslichen Farbstoffe bevorzugt. Dabei handelt es sich beispielsweise um Azo- und Anthrachinonfarbstoffe, Sie eignen sich insbesondere zur Einfärbung von PETBB, da aufgrund der hohen Glasübergangstemperatur von PETBB und PENBB die Migration des Farbstoffes eingeschränkt ist (Literatur J. Koerner Lösliche Farbstoffe in der Kunststoffindustrie in" VDI-Gesellschaft Kunststofftechnik: Einfärben von Kunststoffen, VDI-Verlag, Düsseldorf 1975).

Geeignete lösliche Farbstoffe sind beispielsweise: Solventgelb 93, ein Pyrazolonderivat; Solventgelb 16, ein fettlöslicher Azo-Farbstoff; Fluorolgrüngold; ein fluoreszierender, polycyclischer Farbstoff; Solventrot 1, ein Azofarbstoff; Azofarbstoffe, wie Thermoplastrot BS, Sudanrot BB, Solventrot 138, ein Anthrachinonderivat, fluoreszierende Benzopyranfarbstoffe, wie Fluorolrot GK und Fluorolorange GK, Solventblau 35, ein Anthrachinonfarbstoff, Solventblau, ein Phthalocyaninfarbstoff und viele andere. Geeignet sind auch Mischungen von zwei oder mehreren dieser löslichen Farbstoffe.

Erfindungsgemäß kann der lösliche Farbstoff in der gewünschten Konzentration bereits beim Rohstoffhersteller zudosiert werden oder bei der Plattenherstellung in den Extruder dosiert werden.

Besonders bevorzugt wird aber die Zugabe des Farbadditives über die Masterbatchtechnologie. Der lösliche Farbstoff wird in einem festen Trägermaterial voll dispergiert und/oder gelöst. Als Trägermaterial kommen gewisse Harze, das bibenzolmodifizierte Polyalkylentheraphthalat oder bibenzolmodifizierte Polyalkylennaphthalat selbst oder auch andere Polymere, die mit dem bibenzolmodifiziertem Polyalkytentheraphthalat oder bibenzolmodifiziertem Polvalkylennaphthalat ausreichend verträglich sind, in Frage.

Wichtig ist, daß die Komgröße und das Schüttgewicht des Masterbatches ähnlich der Korngröße und dem Schüttgewicht des bibenzolmodifizierten Polyalkylentheraphthalat oder bibenzolmodifizierten Polyalkylennaphthalats sind, so daß eine homogene Verteilung und damit eine homogene, transparente Einfärbung erfolgen kann.

Der Oberflächenglanz der transparent eingefärbten Platte, gemessen nach DIN 67530 (Meßwinkel 20°) ist größer als 100, vorzugsweise größer als 110. Die Lichttransmission, gemessen nach ASTM D 1003, liegt im Bereich von 5 bis 90 %, vorzugsweise im Bereich von 10 bis 80 % und die Trübung der Platte, gemessen nach ASTM D 1003, liegt im Bereich von 0 bis 50 %, vorzugsweise im Bereich von 0 bis 40%.

In der gedeckt eingefärbten Ausführungsform enthält die amorphe Platte mindestens ein organisches und/oder anorganisches Pigment als Farbmittel. Die Konzentration des Farbmittels liegt vorzugsweise im Bereich von 0,5 bis 30 Gew.-%, bezogen auf das Gewicht des bibenzolmodifizierten Polyalkylentheraphthalats oder des bibenzolmodifizierten Polyalkylennaphthalats.

Bei den Farbmitteln unterscheidet man nach DIN 55944 zwischen Farbstoffen und Pigmenten. Pigmente sind unter den jeweiligen Verarbeitungsbedingungen im Polymeren nahezu unlöslich, während Farbstoffe löslich sind (DIN 55949). Die färbende Wirkung der Pigmente wird durch die Teilchen selbst verursacht. Der Begriff Pigment ist im allgemeinen an eine Teilchengröße von 0,01 mm bis 1,0 mm gebunden. Nach DIN 53206 unterscheidet man bei der Definition der Pigmentteilchen zwischen Primärtelichen, Aggregaten und Agglomeraten.

Primärteilchen, wie sie in der Regel bei der Herstellung anfallen, besitzen aufgrund ihrer außerordentlich geringen Teilchengröße eine ausgeprägte Tendenz sich zusammenzulagern. Dadurch entstehen aus den Primärteilchen durch flächiges Zusammenlagern die Aggregate, die deshalb eine kleinere Oberfläche aufweisen, als der Summe der Oberfläche ihrer Primärteilchen entspricht. Durch Aneinanderlagerung von Primärteilchen und/oder Aggregaten über Ecken und Kanten bilden sich Agglomerate, deren Gesamtoberfläche von der Summe der Einzelflächen nur wenig abweicht. Wenn man - ohne nähere Angaben - von Pigmentteilchengröße spricht, bezieht man sich auf die Aggregate, wie sie im wesentlichen nach der Einfärbung vorliegen.

In pulverförmigen Pigmenten sind die Aggregate stets zu Agglomeraten zusammengelagert, die bei der Einfärbung zerteilt, vom Kunststoff benetzt und homogen verteilt werden müssen. Diese gleichzeitig ablaufenden Vorgänge werden als Dispergierung bezeichnet. Bei der Einfärbung mit Farbstoffen handelt es sich demgegenüber um einen Lösungsprozeß, als dessen Ergebnis der Farbstoff molekular gelöst vorliegt.

Im Gegensatz zu den anorganischen Pigmenten ist bei einzelnen organischen Pigmenten eine völlige Unlöslichkeit nicht gegeben, insbesondere nicht bei einfach aufgebauten Pigmenten mit niedrigen Molekulargewichten.

Farbstoffe sind durch ihre chemische Struktur ausreichend beschrieben. Pigmente jeweils gleicher chemischer Zusammensetzung können jedoch in verschiedenen Kristallmodifikationen hergestellt werden und vorliegen. Ein typisches Beispiel dafür ist das Weißpigment Titandioxid, das in der Rutilform und in der Anatasform vorliegen kann.

Bei Pigmenten kann durch Beschichtung (Coating), d.h. durch Nachbehandlung der Pigmentteilchenoberfläche, mit organischen oder anorganischen Mitteln eine Verbesserung der Gebrauchseigenschaften erzielt werden. Diese Verbesserung liegt insbesondere in der Erleichterung der Dispergierung und in der Anhebung der Licht-, Wetter- und Chemikalienbeständigkeit. Typische Beschichtungssmittel für 5 Pigmente sind beispielsweise Fettsäuren, Fettsäureamide, Siloxane und Aluminiumoxide.

Geeignete anorganische Pigmente sind beispielsweise die Weißpigmente Titandioxid, Zinksulfid und Zinnsulfid, die gegebenenfalls organisch und/oder anorganisch gecoated sein können. Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Die mittlere Teilchengröße ist relativ klein und liegt vorzugsweise im Bereich von 0,10 bis 0,30 mm. Durch Titandioxid der beschriebenen Art entstehen innerhalb der Polymermatrix keine Vakuolen während der Plattenherstellung.

Die Titandioxidteilchen können einen Übäzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

TiO$_2$ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. TiO$_2$-Partikel mit einem Überzug aus mehreren dieser Verbindungen werden z.B. in der EP-A-0 044 515 und der EP-A-0 078 633 beschrieben. Weiterhin kann der Überzug organische Verbindungen mit polaren und unpolaren Gruppen enthalten. Die organischen Verbindungen müssen bei der Herstellung der Platte durch Extrusion der Polymerschmelze ausreichend thermostabil sein. Polare Gruppen sind beispielsweise -OH, -OR, -COOX (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z.B. Polydimethylsiloxan und Polymethylhydrogensiloxan.

Der Überzug auf den Titandioxidteilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxidteilchen. Der Überzug wird auf die Teilchen vorzugsweise in wäßriger Suspension aufgebracht. Die anorganischen Oxide werden aus wasserlöslichen Verbindungen, z.B. Alkali-, insbesondere Natriumaluminat, Aluminiumhydroxid, Aluminiumsulfat, Aluminiumnitrat, Natriumsilikat (Wasserglas) oder Kieselsäure in der wäßrigen Suspension ausgefällt.

Unter anorganischen Oxiden wie Al$_2$O$_3$ und SiO$_2$ sind auch die Hydroxide oder deren verschiedenen Entwässerungsstufen wie z.B. Oxidhydrate zu verstehen, ohne daß man deren genaue Zusammensetzung und Struktur kennt. Auf das TiO$_2$-Pigment werden nach dem Glühen und Mahlen in wäßriger Suspension die Oxidhydrate z.B. des Aluminiums und/oder Siliciums gefällt, die Pigmente dann gewaschen und getrocknet. Diese Ausfällung kann somit direkt in einer Suspension geschehen, wie sie im Herstellungsprozeß nach dem Glühen und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten TiO$_2$-Suspension im stark alkalischen Bereich (pH größer 8) liegen. Die Ausfällung erfolgt dann durch Zugabe von Mineralsäure, wie Schwefelsäure, im pH-Bereich von 5 bis 8. Nach der Ausfällung der Metalloxide wird die Suspension noch 15 Minuten bis etwa 2 Stunden gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 110°C, getrocknet.

Typische anorganische Schwarzpigmente sind Rußmodifikationen, die ebenfalls gecoated sein können, Kohlenstoffpigmente, die sich von den Rußpigmenten durch einen höheren Aschegehalt unterscheiden, und oxidische Schwarzpigmente, wie Eisenoxidschwarz sowie Kupfer-, Chrom- und Eisenoxid-Mischungen (Mischphasenpigmente).

Geeignete anorganische Buntpigmente sind oxidische Buntpigmente, hydroxylhaltige Pigmente, sulfidische Pigmente und Chromate.

Beispiele für oxidische Buntpigmente sind Eisenoxidrot, Titandioxid-Nickeloxid-Antimonoxid-Mischphasenpigmente, Titandioxid-Chromoxid-Antimonoxid-Mischphasenpigmente, Mischungen der Oxide vom Eisen, Zink und Titan, Chromoxid Eisenoxidbraun, Spinelle des Systems Kobalt-Aluminium-Titan-Nicke Zinkoxid und Mischphasenpigmente auf Basis von anderen Metalloxiden. Typische hydroxylhaltige Pigmente sind beispielsweise Oxid-Hydroxide des dreiwertigen Eisens wie FeOCH.

Beispiele für sulfidische Pigmente sind Cadmium-Sulfid-Selenide, Cadmium-Zinksulfide, Natrium-Aluminium-Silikat mit polysulfidartig gebundenem Schwefel im Gitter.

Beispiele für Chromate sind die Bleichromate, die in den Kristallformen monoklin, rhombisch und tetragonal vorliegen können.

Alle Buntpigmente können wie die Weiß- und Schwarzpigmente sowohl ungecoated als auch anorganisch und/oder organisch gecoated vorliegen.

Die organischen Buntpigmente teilt man in der Regel in Azopigmente und sogenannte Nicht-Azopigmente auf. Charakteristisch für die Azopigmente ist die Azo-(-N=N-)-Gruppe. Azopigmente können Monoazopigmente, Diazopigmente, Diazokondensationspigmente, Salze von Azofärbsäuren und Mischungen aus den Azopigmenten sein.

Die amorphe gedeckt eingefärbte Platte enthält mindestens ein anorganisches und/oder organisches Pigment. In speziellen Ausführungsformen kann die amorphe Platte auch Mischungen aus anorganischen und/oder organischen Pigmenten sowie zusätzlich lösliche Farbstoffe enthalten. Die Konzentration des löslichen Farbstoffes liegt dabei vorzugsweise im Bereich von 0,01 bis 20 Gew.-%, besonders bevorzugt im Bereich von 0,5 bis 10 Gew.-%, bezogen auf das Gewicht des bibenzolmodifizierten Polyalkylentheraphthalats oder des bibenzolmodifizierten Polyalkylennaphthalats.

Erfindungsgemäß können die Farbmittel (anorganische und/oder organische Pigmente sowie gegebenenfalls Farbstoffe) in der gewünschten Konzentration bereits beim Rohstoffhersteller zudosiert werden oder bei der Plattenherstellung in den Extruder dosiert werden. Besonders bevorzugt wird aber die Zugabe der/des Farbadditive(s) über die Masterbatchtechnologie oder über die Fest-Pigment-Präparation. Das organische und/oder anorganische Pigment sowie gegebenenfalls der lösliche Farbstoff werden in einem festen Trägermaterial voll dispergiert. Als Träger kommen gewisse Harze, das einzufärbende Polymere selbst oder auch andere Polymere, die mit dem bibenzolmodifizierten Polyalkylentheraphthalats oder mit dem bibenzolmodifizierten Polyalkylennaphthalats ausreichend verträglich sind, in Frage. Wichtig ist, daß die Korngröße und das Schüttgewicht des Fest-Pigment-Präparates oder des Masterbatches ähnlich der Korngröße und dem Schüttgewicht des bibenzolmodifizierten Polyalkylentheraphthalats oder des bibenzolmodifizierten Polyalkylennaphthalats sind, so daß eine homogene Verteilung und damit Einfärbung erfolgen kann.

Der Oberflächenglanz der eingefärbten Platte, gemessen nach DIN 67530 (Meßwinkel 20°) ist vorzugsweise größer als 90 und die Lichttransmission, gemessen nach ASTM D 1003, ist vorzugsweise kleiner 10 %.

Darüber hinaus weist die eingefärbte Platte eine gedeckte, homogene Optik auf.

Im Fall von 10 % Bibenzolmodifiziertem Polyethylenterephthalat tritt bei der Messung der Schlagzähigkeit a, nach Charpy (gemessen nach ISO 179/1 D), an der Platte vorzugsweise kein Bruch auf. Darüber hinaus liegt die Kerb-schlagfestigkeit $a_K$, nach Izod (gemessen nach ISO 180/IA), der Plane vorzugsweise im Bereich von 4 bis 16 kJ/ml, besonders bevorzugt im Bereich von 6 bis 12 kJ/m$^2$. Die Izod Schlagfestigkeit nach ISO 180 liegt bei -40°C vorzugsweise im Bereich von 10 bis 120 kJ/m$^2$, besonders bevorzugt im Bereich von 40 bis 80 kJ/m$^2$.

Die Bildschärfe der Platte, die auch Clarity genannt wird, und unter einem Winkel kleiner als 2,5° ermittelt wird (ASTM D 1003), liegt vorzugsweise über 96 % und besonders bevorzugt über 97 %.

Bibenzolmodifizierte Polyethylenterephthalat-Polymere mit einem Kristallitschmelzpunkt $T_m$, gemessen mit DSC (Differential Scanning Calorimetry) mit einer Aufheizgeschwindigkeit von 20°C/min, von 180°C bis über 365°C, vorzugsweise von 180°C bis 310°C, abhängig von dem Bibenzolsäuregehalt, mit einem Kristallisationstemperaturbereich $T_c$, zwischen 75°C und 280°C, einer Glasübergangstemperatur $T_g$ zwischen 65°C und 130°C und mit einer Dichte, gemessen nach DIN 53479, von 1,15 bis 1,40 und einer Kristallinität zwischen 5 und 65 %, vorzugsweise 20 % und 65 %, stellen als Ausgangsmaterialien zur Herstellung der Platte bevorzugte Polymere dar.

Bibenzolmodifizierte Polyethylennaphthalat-Polymere mit einem Kristallitschmelzpunkt $T_m$, gemessen mit DSC (Differential Scanning Calorimetry) mit einer Aufheizgeschwindigkeit von 10°C/min, von 120°C bis 310°C, vorzugsweise von 140°C bis 280°C, abhängig von dem Bibenzolsäuregehalt, mit einem Kristallisationstemperaturbereich $T_c$, zwischen 75°C und 280°C, einer Glasübergangstemperatur $T_g$ zwischen 65°C und 120°C und mit einer Dichte, gemessen nach DIN 53479, von 1,20 bis 1,45 und einer Kristallinität zwischen 5 % und 65 %, vorzugsweise 20 % und 65 %, stellen als Ausgangsmaterialien zur Herstellung der Platte bevorzugte Polymere dar.

Die genannten Polymere sind abhängig vom Bibenzolsäuregehalt kristallisierbar, was in diesem Zusammenhang bedeuten soll, daß Δ Hf (Delta heat of fusion) kleiner ist als 10 J/g. Dies ist z.B. bei dem PETBB Copolymer der Fall, wenn der Bibenzolsäuregehalt zwischen 25 Gew-% und 35 Gew-% liegt.

Die Standardviskosität SV (DCE) des bibenzolmodifizierten Polyethylenterephthalats und des bibenzolmodifizierten Polyethylennaphthalats, gemessen in Dichloressigsäure nach DIN 53728, liegt zwischen 600 und weniger als 3000, insbesondere zwischen 800 und 2000, vorzugsweise zwischen 950 und 1250 und besonders bevorzugt zwischen 1000 und 1200.

Die intrinsische Viskosität IV (DCE) berechnet sich wie folgt aus der Standardviskosität SV (DCE):

$$IV \text{ (DCE)} = 6,67 \times 10^{-4} SV \text{ (DCE)} + 0,118$$

Das Schüttgewicht, gemessen nach DIN 53466, liegt vorzugsweise zwischen 0,75 kg/dm$^3$ und 1,0 kg/dm$^3$, und besonders bevorzugt zwischen 0,80 kg/dm$^3$ und 0,90 kg/dm$^3$.

Die Polydispersität des bibenzolmodifizierten Polyalkylennaphthalats oder bibenzolmodifizierten Polyalkylen-theraphthalats $M_w/M_n$, gemessen mittels GPC, liegt vorzugsweise zwischen 1,5 und 4,0 und besonders bevorzugt zwischen 2,0 und 3,5. Die erfindungsgemäße Platte zeigt ein duktiles Verhalten bei Temperaturen unter -5°C, wobei bei Erhöhung des Biobenzolsäuregehalts das duktile Verhalten bei noch niedrigeren Temperaturen erhalten bleibt. Darüber hinaus hat sich gezeigt, daß bei höherer Modifikation mit Bibenzolsäure im PET sich die Glastemperatur erhöht, wodurch die Platten in temperaturkritischen Aussen- und Innenanwendungen geeignet sind. Darüber hinaus ergaben Messungen, daß die erfindungsgemäße Platte schwer brennbar und schwer entflammbar ist, so daß sie sich beispielsweise für Innenanwendungen, für Waggons der Bahn und im Messebau eignet. Desweiteren ist die erfindungsgemäße Platte ohne Umweltbelastung und ohne Verlust der mechanischen Eigenschaften problemlos recyklierbar, wodurch sie sich beispielsweise für die Verwendung in kurzlebigen Werbeschildern oder anderen Werbeartikeln eignet.

Die Herstellung der erfindungsgemäßen, transparenten, amorphen Platte kann beispielsweise nach einem Extrusionsverfahren in einer Extrusionsstraße erfolgen.

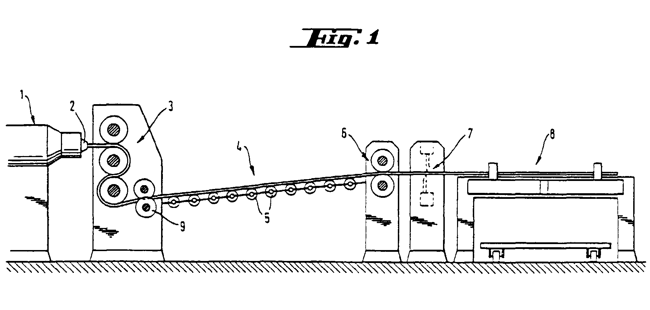

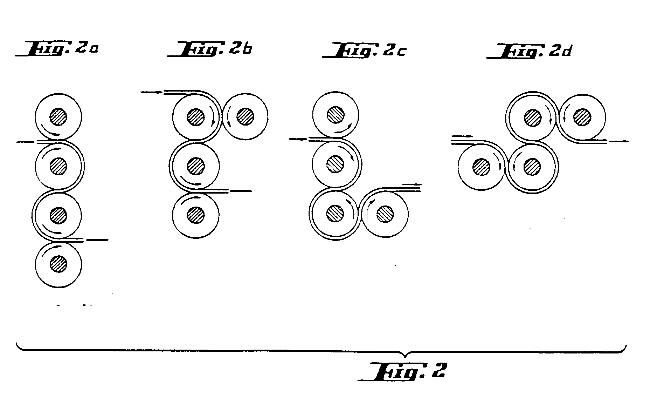

Eine derartige Extrusionsstraße ist in Fig. 1 schematisch dargestellt (vgl. WO 96/38282). Sie umfaßt im wesentlichen:

- einen Extruder 1 als Plastifizierungsanlage,
- eine Breitschlitzdüse 2 als Werkzeug zum Ausformen,
- ein Glättwerk/Kalander 3 als Kalibrierwerkzeug,
- ein Kühlbett 4 und/oder eine Rollenbahn 5 zur Nachkühlung,
- einen Walzenabzug 6,
- eine Trennsäge 7,
- eine Seitenschneideinrichtung 9, und gegebenenfalls
- eine Stapelvorrichtung 8.

Das Verfahren zur Herstellung der erfindungsgemäßen Platte wird im folgenden am Beispiel von mit 10 Gew.% bibenzolmodifiziertem Polyethylenterephthalat (PETBB) ausführlich beschrieben.

Das Verfahren ist dadurch gekennzeichnet, daß man das bibenzolmodifizierte Polyethylenterephthalat gegebenenfalls trocknet, dann im Extruder, gegebenenfalls zusammen mit dem löslichen Farbstoff, dem Farbmittel und/oder dem UV-Stabilisatoren, aufschmilzt, die Schmelze durch eine Düse ausformt und anschließend im Glättwerk kalibriert, glättet und kühlt, bevor man die Platte auf Maß bringt.

Die Trocknung des PETBB vor der Extrusion erfolgt vorzugsweise für 4 bis 6 Stunden bei 140 bis 180°C.

Das PETBB wird danach im Extruder aufgeschmolzen. Vorzugsweise liegt die Temperatur der Schmelze im Bereich von 250 bis 320°C, wobei die Temperatur der Schmelze im wesentlichen sowohl durch die Temperatur des Extruders, als auch durch die Verweilzeit der Schmelze im Extruder eingestellt werden kann. Die Schmelze verläßt den Extruder dann durch eine Düse. Diese Düse ist vorzugsweise eine Breitschlitzdüse.

Das vom Extruder aufgeschmolzene und von einer Breitschlitzdüse ausgeformte PETBB wird von Glättkalanderwalzen kalibriert, d. h. intensiv gekühlt und geglättet. Die Kalanderwalzen können beispielsweise in einer I- (Fig. 2a), F- (Fig. 2b), L- (Fig. 2c) oder S-Form (Fig. 2d) angeordnet sein (vgl. WO 96/38282).

Das PETBB-Material kann dann anschließend auf einer Rollenbahn nachgekühlt, seitlich auf Maß geschnitten, abgelängt und schließlich gestapelt werden.

Die Dicke der PETBB-Platte wird im wesentlichen vom Abzug, der am Ende der Kühlzone angeordnet ist, den mit ihm geschwindigkeitsmäßig gekoppelten Kühl(Glätt-)Walzen und der Fördergeschwindigkeit des Extruders einerseits und dem Abstand der Walzen andererseits bestimmt.

Als Extruder können sowohl Einschnecken- als auch Zweischneckenextruder eingesetzt werden. Die Breitschlitzdüse besteht vorzugsweise aus dem zerlegbaren Werkzeugkörper, den Lippen und dem Staubalken zur Fließregulierung über die Breite. Dazu kann der Staubalken durch Zug- und Druckschrauben verbogen werden. Die Dickeneinstellung erfolgt durch Verstellen der Lippen. Wichtig ist es, auf eine gleichmäßige Temperatur des PETBB und der Lippe zu achten, da sonst die PETBB-Schmelze durch die unterschiedlichen Fließwege verschieden dick ausfließt. Das Kalibrierwerkzeug, d. h. der Glättkalander gibt der PETBB-Schmelze die Form und die Abmessungen. Dies geschieht durch Einfrieren unterhalb der Glasübergangstemperatur mittels Abkühlung und Glätten. Verformt werden sollte in diesem Zustand nicht mehr, da sonst in diesem abgekühlten Zustand Oberflächenfehler entstehen würden. Aus diesem Grund werden die Kalanderwalzen vorzugsweise gemeinsam angetrieben. Die Temperatur der Kalanderwalzen muß zwecks Vermeidung des Anklebens der PETBB-Schmelze kleiner als die Kristallitschmeiztemperatur sein. Die PETBB-Schmelze verläßt mit einer Temperatur von 240 bis 300°C die Breitschlitzdüse. Die erste Glätt-Kühl-Walze hat je nach Ausstoß und Plattendicke eine Temperatur zwischen 50°C und 80°C. Die zweite etwas kühlere Walze kühlt die zweite oder andere Oberfläche ab.

Während die Kalibriereinrichtung die PETBB-Oberflächen möglichst glatt zum Einfrieren bringt und das Profil so weit abkühlt, daß es formsteif ist, senkt die Nachkühleinrichtung die Temperatur der PETBB-Platte auf nahezu Raumtemperatur ab. Die Nachkühlung kann auf einem Rollenbrett erfolgen. Die Geschwindigkeit des Abzugs sollte mit der Geschwindigkeit der Kalanderwalzen genau abgestimmt sein, um Defekte und Dickenschwankungen zu vermeiden. Als Zusatzeinrichtungen können sich in der Extrusionsstraße zur Herstellung von PETBB-Platten eine Trennsäge als Ablängeinrichtung, die Seitenbeschneidung, die Stapelanlage und eine Kontrollstelle befinden. Die Seiten- oder Randbeschneidung ist vorteilhaft, da die Dicke im Randbereich unter Umständen ungleichmäßig sein kann. An der Kontrollstelle werden Dicke und Optik der Platte gemessen.

Die Herstelllung der erfindungsgemäßen, eingefärbten, amorphen, gegebenenfalls mit einem oder mehreren Additiven ausgerüstete Platte kann auch nach dem an sich bekannten Coextrusionsverfahren in einer Extrusionsstraße erfolgen. Die Coextrusion als solche ist literaturbekannt (siehe z.B. EP-A-110221 und EP-A-110238, auf die hier ausdrücklich verwiesen wird).

Hierbei sind an einem Coextruderadapter jeweils ein Extruder zur Plastifizierung und Erzeugung der Kernschicht und pro Deckschicht jeweils ein weiterer Extruder angeschlossen. Der Adapter ist so konstruiert, daß die die Deckschichten formenden Schmelzen als dünne Schichten haftend auf die Schmelze der Kernschicht aufgebracht werden. Der so erzeugte mehrschichtige Schmelzestrang wird dann in der anschließend angeschlossenen Düse ausgeformt und im Glättwerk kalibriert, geglättet und gekühlt, bevor die Platte abgelängt wird.

Im Coextrusionsverfahren hergestellte Platten können bis zu zwei Deckschichten und eine oder mehrere Kernschichten haben. Bevorzugte Ausführungsformen sind Platten mit einer oder zwei UV-stabilisierten Deckschichten und/oder einer oder mehreren Kernschichten, die vorzugsweise die oben angeführten Recyclate enthalten.

Durch die überraschende Vielzahl ausgezeichneter Eigenschaften eignet sich die erfindungsgemäße, amorphe bibenzolmodifizierte Polyalkylentherephthalat und bibenzolmodifizierte Polyalkylennaphthalat-Platte hervorragend für eine Vielzahl verschiedener Verwendungen, beispielsweise für Innenraumverkleidung, für Messebau und Messeartikel, als Displays, für Schilder, für Schutzverglasung von Maschinen und Fahrzeugen, im Beleuchtungssektor, im Laden- und Regalbau, als Werbeartikel, als Menükartenständer, als Raumteiler und bei Möbeln sowie für Außenanwendungen, beispielsweise als Werbeschilder, Dachkuppel und Automobilwindabweiser, Verglasungen, Überdachungen oder als Glasersatz.

Weitere Einsatzbereiche sind Verglasungen oder Glasersatz, insbesondere wenn die erfindungsgemäße Platte mindestens einseitig eine siliciumhaltige und/oder acrylhaltige Beschichtung aufweist, wie sie in der europäischen Patentanmeldung 97929275.2 beschrieben ist.

Zur weiteren UV-Stabilisation kann die erfindungsgemäße Platte UV-Stabilisatoren bzw. UV-Absorber als Lichtschutzmittel enthalten. Diese sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Platten ungeeignet, da sie zur Verfärbung oder Farbänderung führen bzw. gedeckte Einfärbung hervorrufen. Für transparente, amorphe Platten sind nur organische und metallorganische Verbindungen geeignet, die dem zu stabilisierenden Thermoplasten keine oder nur eine extrem geringe Farbe oder Farbänderung verleihen.

Geeignete UV-Stabilisatoren als Lichtschutzmittel sind beispielsweise 2-Hydroxybenzophenone, 2-Hydroxybenzotriazole, nickelorganische Verbindungen, Salicylsäurederivate, Zimtsäureester-Derivate, Resorcinmonobenzoate, Oxalsäureamilide, Hydroxybenzoesäureester, sterisch gehinderte Amine und Triazine, wobei die 2-Hydroxybenzotriazole und die Triazine bevorzugt sind. Die Konzentration an Lichtschutzmittel liegt vorzugsweise zwischen 0,01 Gew.-% und 5 Gew.-%, bezogen auf das Gewicht an Thermoplast, insbesondere bevorzugt zwischen 0,1 und 3 Gew.-%.

Besonders bevorzugte Lichtschutzmittel sind 2-(4,6-Diphenyl-1,3,5-triazin-2-yl)-5-(hexyl)oxyphenol und 2,2'-Methylen-bis(6-(2H-benzotriazol-2-yl)-4-(1,1,3,3-Tetramethylbutyl)phenol.

Die oben beschriebenen Lichtschutzmittel können einzeln oder in Kombination von mehreren davon verwendet werden.

Bei Untersuchungen von UV stabilisierten Platten hat sich herausgestellt, daß hauptsächlich die UV-Stabilisatoren aktiv sind, die sich an oder in der Nähe der Oberfläche der Platte befinden, die zur Strahlungsquelle hingewendet ist. Dies bedeutet, daß bei Platten die eine gleichmäßige Verteilung an UV-Stabilisatoren enthalten, der größte Teil der Lichtschutzmittel in der Platte nicht aktiv zum Schutz der mechanischen und optischen Eigenschaften beiträgt.

Daher ist es bevorzugt, daß die Verteilung des UV-Stabilisatoren so vorgenommen wird, daß diese hauptsächlich in der Nähe der Oberflächen der erfindungsgemäßen Platte vorhanden sind. Die dazu nötigen Verfahren sind dem Fachmann bekannt. Zum Beispiel kann durch eine Mehrschichtextrusion auf beiden Oberflächen einer extrudierten Platte eine dünne Schicht mit einer sehr hohen Konzentration an UV-Stabilisatoren aufgebracht werden. Selbstverständlich kann diese Schicht auch nur auf einer Seite der extrudierten Platte aufgebracht werden. Bevorzugte Konzentrationen an UV-Stabilisatoren in diesen dünnen Schichten liegen zwischen 5 und 30 Gew.-%, insbesondere bevorzugt zwischen 10 und 20 Gew.-%, bezogen auf die Menge an Thermoplast in dieser Schicht.

Durch solch einen Plattenaufbau bzw. durch solch mehrschichtige Platten kann sichergestellt werden, daß praktisch die gesamte Menge an eingesetztem UV-Stabilisator wirksam ist. Damit wird der Einsatz dieser relativ teuren Zuschlagstoffe optimiert.

Untersuchungen haben gezeigt, daß bei Platten, die eine hohe Konzentration an UV-Stabilisatoren in der Nähe der Oberfläche der Platte aufweisen, die mechanischen und optischen Eigenschaften, hauptsächlich die Schlagfestigkeit, in der Anfangszeit von Bewitterungsversuchen sich praktisch überhaupt nicht verändern.

Eine weitere bevorzugte Ausführung der erfindungsgemäßen Platte ist die Kaschierung mindestens einer der beiden Außenseiten, z.B. mit einer UV-Strahlen absorbierenden Folie oder mit Dekorfolien. Durch kaschierung mit Dekorfolien erschließen sich weitere Anwendungsbereiche, z.B. für Möbel oder im Innenausbau.

Die Erfindung wird im folgenden anhand von Ausführungsbeispielen näher erläutert, ohne dadurch beschränkt zu werden. Die Messung der einzelnen Eigenschaften erfolgt dabei gemäß der folgenden Normen bzw. Verfahren.

**Oberflächenglanz:**

Der Oberflächenglanz wird nach DIN 67 530 bestimmt. Gemessen wird der Reflektorwert als optische Kenngröße für die Oberfläche einer Platte. Angelehnt an die Normen ASTM-D 523-78 und ISO 2813 wurde der Einstrahlwinkel mit 20' eingestellt. Ein Lichtstrahl trifft unter dem eingestellten Einstrahlwinkel auf die ebene Prüffläche und wird von dieser reflektiert beziehungsweise gestreut. Die auf den photoelektronischen Empfänger auffallenden Lichtstrahlen werden als proportionale elektrische Größe angezeigt. Der Meßwert ist dimensionslos und muß mit dem Einstrahlwinkel zusammen angegeben werden.

**Lichttransmission:**

Unter der Lichttransmission ist das Verhältnis des insgesamt durchgelassenen Lichtes zur einfallenden Lichtmenge zu verstehen. Die Lichttransmission wird mit dem Meßgerät "Hazegard plus" nach ASTM 1003 gemessen.

**Trübung und Clarity:**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner als 2,5° ermittelt. Die Trübung und die Clarity werden mit dem Meßgerät "Hazegard plus" nach ASTM 1003 gemessen.

**Weißgrad:**

Die Bestimmung des Weißgrades erfolgt mit Hilfe des elektrischen Remissionsphotometers "ELREPHO" der Firma Zeiss, Oberkochem (DE), Normlichtart C, 2° Normalbeobachter. Der Weißgrad wird definiert als

$$WG = RY + 3RZ - 3RX.$$

WG = Weißgrad, RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet.

**Oberflächendefekte:**

Die Oberflächendefekte werden visuell bestimmt.

**Schlagzähigkeit a nach Charpy:**

Diese Größe wird nach ISO 179/1 D ermittelt.

**Kerbschlagzähigkeit bzw. -festigkeit $a_k$ nach Izod:**

Diese Größe wird nach SO 180/IA gemessen.

**Wärmeverformungsbeständigkeit (HDT):**

Die Wärmeverformungsbeständigkeit HDT A und HDT B werden nach ISO 75-1.2 bestimmt. HDT A wird bei 1.8 MPa und HDT B bei 0.45 MPa bestimmt.

**Dichte:**

Diese Größe wird nach DIN 53479 bestimmt.

**Standardviskosität SV (DCE):**

Diese Größe wird angelehnt an DIN 53726 in Dichloressigsäure gemessen.
Die intrinsische Viskosität (IV) berechnet sich wie folgt aus der Standardviskosität (SV)

$$IV\ (DCE) = 6{,}67 \times 10^{-4}\,SV\ (DCE) + 0{,}118$$

**Thermische Eigenschaften:**

Die thermischen Eigenschaften wie Kristallitschmelzpunkt $T_m$, Kristallisationstemperaturbereich $T_c$ und Glasübergangstemperatur $T_g$ werden mittels Differential Scanning Calorimetrie (DSC) bei einer Aufheizgeschwindigkeit von 10°C/min gemessen.

**Molekulargewicht, Polydispersität:**

Die Molekulargewichte $M_w$ und $M_n$ und die resultierende Polydispersität $M_w/M_n$ werden mittels Gelpermeationschromatographie (GPC) gemessen.

**Bewitterung (beidseitig), UV-Stabilität:**

Die UV-Stabilität wird nach der Testspezilikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 05 W/m$^2$, 340 nm |
| Temperatur | 63°C |
| Relative Luftfeuchte | 50% |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

Die Farbveränderung der Proben nach der künstlichen Bewitterung wird mit einem Spektralphotometer nach DIN 5033 gemessen.

Es gilt:

| | |
|---|---|
| DL: | Differenz in der Helligkeit |
| +DL: | Die Probe ist heller als der Standard |
| -DL: | Die Probe ist dunkler als der Standard |
| DA: | Differenz im Rot-Grün-Bereich |
| +DA: | Die Probe ist roter als der Standard |
| -DA: | Die Probe ist grüner als der Standard |
| DB: | Differenz im Blau-Gelb-Bereich |
| +DB: | Die Probe ist gelber als der Standard |
| -DB: | Die Probe ist blauer als der Standard |
| DE: | Gesamtfarbänderung |

$$DE = \ddot{O}DL^2 + DA^2 + DB^2$$

Je größer die numerische Abweichung vom Standard ist, desto größer ist der Farbunterschied. Numerische Werte von <0,3 sind vernachlässigbar und bedeuten, daß keine signifikante Farbänderung vorliegt.

Der Gelbwert G ist die Abweichung von der Farblosigkeit in Richtung "Gelb" und wird gemäß DIN 6167 gemessen. Gelbwert G-Werte von <5 sind visuell nicht sichtbar.

In den nachstehenden Beispielen und Vergleichsbeispielen handelt es sich jeweils um einschichtige Platten unterschiedlicher Dicke, die auf der beschriebenen Extrusionsstraße hergestellt werden.

**Beispiel 1:**

Das 10%-tig bibenzolmodifizierte Polyethylenterephthalat (PETBB), aus dem die transparente Platte hergestellt wird, hat eine Standardviskosität SV (DCE) von (1010), was einer intrinsischen Viskosität IV (DCE) von 0,79 dl/g entspricht. Der Feuchtigkeitsgehalt liegt bei <0,2 % und die Dichte (DIN 53479) bei 1,41 g/cm$^3$. Die Kristallinität beträgt 33 %, wobei der Kristallitschmelzpunkt nach DSC-Messungen bei 259°C liegt. Der Kristallisationstemperaturbereich $T_c$ liegt zwischen 140°C und 259°C. Die Polydispersität $M_w/M_n$, des bibenzolmodifizierten Polyalkylenterephthalatpolymeren beträgt 2,14. Die Glasübergangstemperatur liegt bei 84°C.

Vor der Extrusion wird das bibenzolmodifizierte Polyethylenterephthalat 5 Stunden bei 170°C in einem Trockner getrocknet und dann in einem Einschneckenextruder bei einer Extrusionstemperatur von 281°C durch eine Breitschlitzdüse auf einen Glättkalander, dessen Walzen S-förmig angeordnet sind, extrudiert und zu einer 3 mm dicken Platte geglättet. Die erste Kalanderwalze hat eine Temperatur von 68°C und die nachfolgenden Walzen haben jeweils eine Temperatur von 63°C.

Die Geschwindigkeit des Abzuges und der Kalanderwalzen liegt bei 5,0 m/min. Im Anschluß an die Nachkühlung wird die transparente, 3 mm dicke PETBB-Platte mit Trennsägen an den Rändern gesäumt, abgelängt und gestapelt.

Die hergestellte transparente PETBB-Platte hat folgendes Eigenschafts profil:

| | |
|---|---|
| - Dicke | 3mm |
| - Oberflächenglanz 1. Seite | 185 |
| (Meßwinkel 20°) 2. Seite | 179 |
| - Lichttransmission | 82% |
| - Clarity (Klarheit) | 98.5% |
| - Trübung | 2.5% |
| - Oberflächendefekte pro m$^2$ (Stippen, Orangenhaut, Blasen usw.) | keine |
| - Schtagzähigkeit $a_n$ nach Charpy | kein Bruch |
| - Schlagzähigkeit $a_k$ nach Izod bei -40°C: | 69 kJ/m$^2$ |
| - Kerbschlagzähigkeit $a_k$ nach Izod bei RT | 5 kJ/m$^2$ |
| - Kristallinität | 0% |
| - Dichte | 1.3 g/cm$^3$ |

**Beispiel 2:**

Analog Beispiel 1 wird eine transparente Platte hergestellt, wobei ein 50% modifiziertes bibenzolmodifiziertes Polyethylennaphthalat eingesetzt wird, das folgende Eigenschaften aufweist:

| | |
|---|---|
| SV (DCE) | 2020 |
| IV(DCE) | 1,23 dl/g |
| Kristallinität | 50% |
| Kristallitschmelzpunkt $T_m$ | 286°C |
| Kristallisationstemperaturbereich $T_c$ | 172°C bis 245°C |
| Polydispersität $M_w/M_n$ | 1,6 |
| Glasübergangstemperatur | 124°C |

Die Extrusionstemperatur liegt bei 295°C. Die erste Kalanderwalze hat eine Temperatur von 80°C und die nachfolgenden Walzen haben eine Temperatur von 75°C. Die Geschwindigkeit des Abzuges und der Kalanderwalze liegt bei 5.0 m/min.

Die hergestellte transparente PETBB-Platte hat folgendes Eigenschaftsprofil:

| | |
|---|---|
| - Dicke | 3mm |
| - Oberflächenglanz 1. Seite | 172 |
| (Meßwinkel 20°) 2. Seite | 170 |
| - Lichttransmission | 88% |
| - Clarity (Klarheit) | 98,7% |
| - Trübung | 2,2% |
| - Oberflächendefekte pro $m^2$ (Stippen, Orangenhaut, Blasen usw.) | keine |
| - Schlagzähigkeit $a_n$ nach Charpy | kein Bruch |
| - Kristallinität | 0% |
| - Dichte | 1,3 $g/cm^3$ |
| - HDT B (0.45 MPA) | 257°C |
| - HDT A (1.8 MPA) | 232°C |

**Beispiel 3:**

Analog Beispiel 2 wird eine transparente 25%-ig modifizierte PETBB-Platte hergestellt. Die Extrusionstemperatur liegt bei 275°C. Die erste Kalanderwalze hat eine Temperatur von 57°C und die nachfolgenden Walzen haben eine Temperatur von 50°C. Die Geschwindigkeit des Abzuges und der Kalanderwalze liegt bei 1,7 m/min.

Die hergestellte PETBB-Platte hat folgendes Eigenschaftsprofil-.

| | |
|---|---|
| - Dicke | 10 mm |
| - Oberflächenglanz 1. Seite | 168 |
| (Meßwinkel 20°) 2. Seite | 164 |
| - Lichttransmission | 82.2% |
| - Clarity (Klarheit) | 97.8% |
| - Trübung | 4.95% |
| - Oberflächendefekte pro $m^2$ (Stippen, Orangenhaut, Blasen usw.) | keine |
| - Schlagzähigkeit $a_n$ nach Charpy | kein Bruch |
| - Kerbschlagzähigkeit $a_k$ nachlzod | 10.3 $kJ/m^2$ |
| - Kristallinität | 0.1 % |
| - Dichte | 1,3 $g/cm^3$ |

**Beispiel 4:**

Analog Beispiel 2 wird eine transparente Platte hergestellt. 75 % bibenzolmodifiziertes Polyethylenterephthalat aus Beispiel 1 werden mit 25 % Recyklat aus diesem bibenzolmodifiziertes Polyethylenterephthalat abgemischt.

Die hergestellte transparente PET-Platte hat folgendes Eigenschaftsprofil:

| | |
|---|---|
| - Dicke | 6mm |
| - Oberflächenglanz 1. Seite | 168 |
| (Meßwinkel 20°) 2. Seite | 166 |
| - Lichttransmission | 83.5% |
| - Clarity (Klarheit) | 98.3% |
| -Trübung | 3.2% |
| - Oberflächendefekte pro $m^2$ (Stippen, Orangenhaut, Blasen usw.) | keine |
| - Schlagzähigkeit $a_n$ nach Charpy | kein Bruch |
| - Kerbschlagzähigkeit $a_k$ nach Izod | 6,9 kJ/$m^2$ |
| - Kaltformbarkeit | gut, keine Defekte |
| - Kristallinität | 0.1 % |
| - Dichte | 1,2 g/$cm^3$ |

**Beispiel 5:**

Es wird eine 6 mm dicke, transparent eingefärbte, amorphe Platte hergestellt, die als Hauptbestandteil das 10%-ig modifizierte PETBB aus Beispiel 1 und 2 Gew.-% des löslichen Farbstoffes Solventrot 138, ein Anthrachinonderivat der Fa. BASF AG, D - Ludwigshafen ($^{®}$Thermoplast G) enthält.

Der lösliche Farbstoff Solventrot 138 wird in Form eines Masterbatches zugegeben. Das Masterbatch setzt sich aus 20 Gew.-% des Farbstoffes Solventrot 138 und 80 Gew.-% des oben beschriebenen bibenzolmodifizierten Polyethylenterephthalats zusammen.

Vor der Extrusion werden 95 Gew.-% des bibenzolmodifizierten Polyethylenteraphthalats und 5 Gew.-% des Masterbatches 5 Stunden bei 170°C in einem Trockner getrocknet und dann in einem Einschneckenextruder bei einer Extrusionstemperatur von 280°C durch eine Breitschlitzdüse auf einen Glättkalander, dessen Walzen S-förmig angeordnet sind, extrudiert und zu einer 6 mm dicken Platte geglättet. Die erste Kalanderwalze hat eine Temperatur von 66°C und die nachfolgenden Walzen haben jeweils eine Temperatur von 60°C. Die Geschwindigkeit des Abzuges und der Kalanderwalzen liegt bei 2,9 m/min.

Im Anschluß an die Nachkühlung wird die transparent eingefärbte, 6 mm dicke PETBB-Platte mit Trennsägen an den Rändern gesäumt, abgelängt und gestapelt.

Die hergestellte, rot-transparent eingefärbte PETBB-Platte hat folgendes Eigenschaftsprofil:

| | |
|---|---|
| - Dicke | 6 mm |
| - Oberflächenglanz 1. Seite | 125 |
| (Meßwinkel 20°) 2. Seite | 121 |
| - Lichttransmission | 56.5% |
| - Clarity (Klarheit) | 97.1% |
| - Trübung | 9.6% |
| - Oberflächendefekte pro $m^2$ (Stippen, Orangenhaut, Blasen usw.) | keine |
| - Schlagzähigkeit $a_n$ nach Charpy | kein Bruch |
| - Kristallinität | 0% |
| - Dichte | 1,3 g/$cm^3$ |

**Patentansprüche**

1. Amorphe Platte enthaltend als Hauptbestandteil einen Thermoplasten, **dadurch gekennzeichnet,** daß der Thermoplast mindestens ein bibenzolmodifizietes Polyalkylentheraphthalat und/oder ein bibenzolmodifiziertes Polyalkylennaphthalat enthält.

2. Platte nach Anspruch 1, mit einer Dicke im Bereich von 0.1 bis 20 mm, wobei der Oberflächenglanz, gemessen nach DIN 67530 (Meßwinkel 20°), größer als 130 ist, die Lichttransmission, gemessen nach ASTM D 1003, mehr als 72% beträgt, und die Trübung der Platte, gemessen nach ASTM D 1003, weniger als 15 % beträgt.

3. Platte gemäß Anspruch 1 oder 2, **dadurch gekennzeichnet,** daß der Thermoplast ausgewählt ist aus der Gruppe bestehend aus bibenzolmodifiziertem Polyethylenterephthalat, bibenzolmodifiziertem Polypropylenterephthalat, bibenzolmodifiziertem Polybutylenterephthalat, bibenzolmodifiziertem Polyethylennaphthalat, bibenzolmodifiziertem Polypropylennaphthalat und bibenzolmodifiziertem Polybutylennaphthalat.

4. Platte gemäß mindestens einem der Ansprüche 1 bis 3, **dadurch gekennzeichnet,** daß bei der Messung der Schlagzähigkeit a nach Charpy, gemessen nach ISO 179/1 D kein Bruch auftritt.

5. Platte gemäß mindestens einem der Ansprüche 1 bis 4, **dadurch gekennzeichnet,** daß die Izo

6. Platte gemäß mindestens einem der Ansprüche 1 bis 5, **dadurch gekennzeichnet,** daß der Thermoplast eine Kristallisationstemperatur, gemessen durch DSC mit einer Aufheizgeschwindigkeit von 10°C/min., im Bereich von 75°C bis 280°C aufweist.

7. Platte gemäß mindestens einem der Ansprüche 1 bis 6, **dadurch gekennzeichnet,** daß der eingesetzte Thermoplast eine Standardviskosität SV (DCE), gemessen in Dichloressigsäure nach DIN 53728, aufweist, die im Bereich von 600 bis weniger 3000 liegt.

8. Platte gemäß mindestens einem der Ansprüche 1 bis 7, **dadurch gekennzeichnet,** daß die Platte einen Kristallinitätsgrad von weniger als 5% hat.

9. Platte gemäß mindestens einem der Ansprüche 1 bis 8, **dadurch gekennzeichnet,** daß die Platte ein lösliches oder nicht lösliches Farbmittel enthält, und/oder eine strukturierte Oberfläche aufweist.

10. Verfahren zur Herstellung einer ein- oder mehrschichtigen Platte gemäß mindestens einem der Ansprüche 1 bis 9, aufweisend folgende Schritte: Aufschmelzen des (der) Thermoplasten in einem oder mehreren Extrudern, Ausformen der Schmelze durch eine Düse, und anschließend im Glättwerk, Kalibrieren, Glätten und Kühlen mit mindestens zwei Walzen, bevor die Platte auf Maß gebracht wird, wobei die erste Walze des Glättwerkes eine Temperatur aufweist, die im Bereich von 50 bis 80°C liegt.

11. Verfahren gemäß Anspruch 10, **dadurch gekennzeichnet,** daß der Thermoplast vor der Extrusion für 4 bis 6 Stunden bei 140 bis 180°C getrocknet wird.

12. Verfahren gemäß Anspruch 10 oder 11, **dadurch gekennzeichnet,** daß die Temperatur der Schmelze im Bereich von 200 bis 320°C liegt.

13. Verwendung einer Platte gemäß einem der Ansprüche 1 bis 9 für Innenanwendungen oder Außenanwendungen.

14. Verwendung eines bibenzolmodifizierten Polyalkylentheraphthalats und/oder eines bibenzolmodifizierten Polyalkylennaphthalats zur Herstellung von Platten nach einem oder mehreren der Ansprüche 1 bis 9.

Fig. 1

_Fig. 2a_     _Fig. 2b_     _Fig. 2c_     _Fig. 2d_

_Fig. 2_

17